# EUROPEAN PATENT APPLICATION

(11) **EP 0 549 999 A1**
(43) Date of publication of application: **07.07.1993**
(21) Application number: 92121788.1
(22) Date of filing: 22.12.1992
(51) Int. Cl.: A23G 3/02, A23G 1/22, A23G 1/28

(54) **Method and apparatus for molding decorative product**

(30) Priority: 27.12.1991 JP 346253/91; 27.12.1991 JP 346254/91
(71) Applicant: AKUTAGAWA CONFECTIONARY CO., LTD., Tokyo (JP)
(72) Inventor: Fujishima, Toshiya, Chigasaki-shi, Kanagawa-ken (JP); Otani, Uichi, Tokyo (JP)
(74) Representative: Herrmann-Trentepohl, Werner, Dipl.-Ing.

(57) **Abstract**

A solidified decorative product (14) such as a chocolate cake formed in an elastic mold (1) and conveyed to a releasing step (C) is taken out by evacuating a releasing pressurizing chamber (12) gastightly enclosing the mold (1) and dilating the elastic mold (1) onto a porous core (20) housed within the chamber (12).

## Description

### BACKGROUND OF THE INVENTION

This invention relates to a method and an apparatus for molding a decorative product in various configurations. More particularly, it relates to a method and an apparatus for molding a decorative product whereby a decorative product, which is a solidified charging article, may be released positively from a mold.

There has for long been practiced a method of fabricating chocolate, fish cake, ice, plaster, erasers, soap or a variety of plastic products from a fluidized charging material, that is a method for fabricating a molded product comprising the steps of charging a fluidized charging material into a mold, molding and solidifying the fluidized charging material by cooling in the case of, e.g. chocolate or by heating in the case of, e.g. fish cake, and releasing the solidified product from the mold.

Among the releasing steps in the above-described method, there are, for example a step consisting in setting a negative pressure in a negative pressure chamber from a side of an elastic mold opposite to its opening end side, as disclosed in Japanese Laid-open Patent Publication No.63-31762 (1988), a step consisting in sucking a decorative product by a suction device provided in the negative pressure chamber, as disclosed in Japanese Laid-open Patent Publication No.63-312116 (1988), and a step consisting in sucking a decorative product by a vertical movement device provided in the device for sucking the decorative product, as disclosed in Japanese Laid-open patent publication No.63-312117 (1988).

However, since the elastic mold from which the decorative product is released is produced by immersing a master having fine concaved and convexed portions in a latex solution for producing a three-dimensional decorative product having the corresponding fine concaved and convexed portions, a uniform wall thickness cannot be produced in those fine portions, especially at the corners thereof, so that the mold is subject to distortion due to concentration of compressed air at the thin-walled section when releasing the molded product by expansion under a negative pressure. Even if the above-mentioned suction device or the vertical movement device is used, the decorative product cannot be sufficiently released from the mold. Besides, a problem is raised in connection with mold durability because the mold is subject to hundreds of times of alternate expansion and contraction.

### SUMMARY OF THE INVENTION

It is an object of the present invention to provide a method and an apparatus for molding a decorative article or product whereby the decorative product may be released easily and reliably from an elastic mold.

It is another object of the present invention to provide a method and an apparatus for molding a decorative product whereby when fabricating a decorative product, the elastic mold subject to repeated expansion and contraction at the time of releasing may be improved in durability.

The above and other objects of the present invention will become apparent from the following description.

In accordance with the present invention, there is provided a method for molding a decorative product comprising a charging step of charging a fluidized charging material from a reservoir into an elastic mold having a charging section for molding a variety of products, a solidifying step for solidifying the fluidized charging material charged into the elastic mold, and a releasing step for taking out the solidified decorative product, the releasing step comprising dilating the elastic mold into contact with an inner surface of a porous core having substantially the same shape as a shape of the elastic mold when in a dilated state and releasing the decorative product out of the opening of the elastic mold in the dilated state.

In accordance with the present invention, there is also provided a molding apparatus for molding a decorative product comprising charging means for charging a fluidized charging material into an elastic mold mounted on a production line for producing the decorative product, solidification means for solidifying the fluidized charging material, and releasing means for taking out the solidified decorative product, the releasing means comprising a releasing pressurizing chamber provided with means for enclosing the elastic mold in a gastight manner and releasing the elastic mold in a non-gastight manner and a porous core in the chamber for substantially embracing the elastic mold in a dilated state when the elastic mold is being enclosed in the gastight manner, to thereby take out the decorative product, and pressure controlling means for dilating the elastic mold onto the core so as to be embraced by the core.

### BRIEF DESCRIPTION OF THE DRAWINGS

Fig.1 is an overall schematic view showing a conventional molding apparatus for fabricating decorative products.

Fig.2 is a longitudinal cross-sectional view showing an example of the state in which a releasing pressurizing chamber of the releasing device is caused to descend on a production line to enclose an elastic mold.

Fig.3 is a longitudinal cross-sectional view showing an example of the state in which the decorative product is taken out of an elastic mold by dilating the elastic mold into contact with the inner surface of a porous core by setting a negative pressure in the releasing pressurizing chamber.

Fig.4 is an explanatory view showing an example of a mold releasing device of a molding apparatus for decorative products according to the present invention, in which the releasing pressurizing chamber is lowered and a fitting chamber is raised.

Fig.5 is an explanatory view showing the releasing pressurizing chamber and the fitting chamber of Fig.4 in a hermetically sealed state with respect to the belt conveyor.

Fig.6 is an explanatory view showing the state in which air is supplied under pressure into the fitting chamber and air is sucked from the releasing pressurizing chamber in Fig.5.

Fig.7 is an explanatory view showing the state in which the decorative product is released from the elastic mold.

Fig.8 is an explanatory view showing the state in which the decorative product released in Fig.7 is set on a reception member and the releasing pressurizing chamber and the fitting chamber are reset to their original positions.

### PREFERRED EMBODIMENTS OF THE INVENTION

Referring to the drawings, preferred embodiments of the present invention will be explained in detail. The present invention is, however, not to be limited to the embodiments illustrated which are given only by way of illustrative examples.

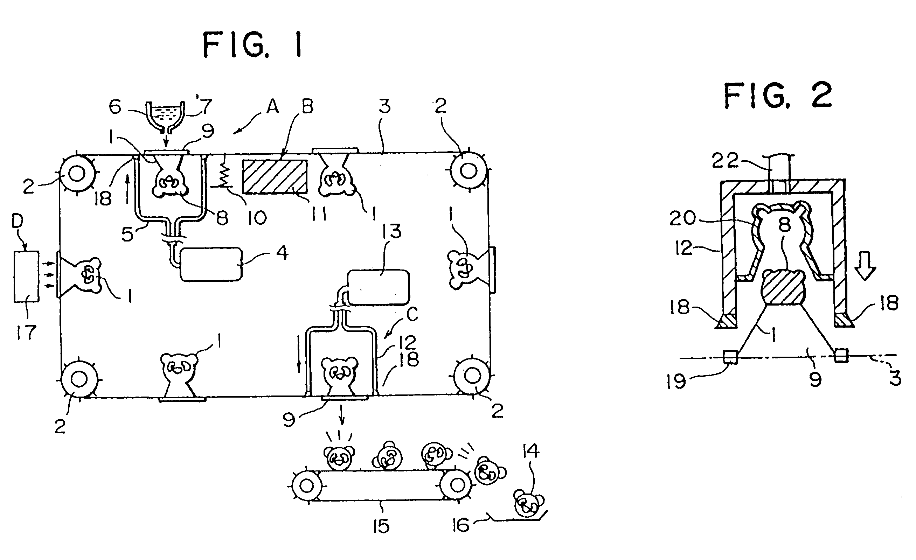

Referring to Fig.1, which is a schematic view showing an overall conventional device employed in the present invention, a panda-shaped elastic mold 1 having fine irregularities on its inner surface for fabricating a decorative product is detachably mounted on an endless conveyor belt 3 placed around pulleys 2 and driven rotationally by driving means, such as an electric motor, not shown. The conveyor belt 3 is adapted for performing intermittent movement consisting in repetition of alternate movement and standstill. During a charging step A, the charging pressurizing chamber 5 is raised in a direction shown by an arrow in Fig.1 by a vertical movement device, not shown, while the conveyor belt 3 is at standstill. The elastic mold 1 suspended from the conveyor belt 3 is embraced intimately by the charging pressurizing chamber 5 from below. After embracing, negative pressure is set in the pressurizing chamber 5 by a pressure controlling device 4 for sucking outside air via an upper opening 9 of the elastic mold 1 for dilating the mold 1. A chocolate material 6 as a liquid charging material in a fluid state, previously adjusted in temperature by tempering, is discharged in a preset amount from a reservoir 7 into a charging section 8 of the elastic mold 1 via a nozzle, not shown, by a constant volume device, not shown. The pressure in the pressurizing chamber 5 is restored to ambient pressure for contracting the elastic mold 1 to its original shape. The charging pressurizing chamber 5 is then lowered by the vertical movement device and the elastic mold 1 is transported on the conveyor belt 3 while being vibrated by a vibrator 10. The elastic mold 1 is moved through a cooling tunnel 11 for a predetermined time for solidifying the fluidized chocolate in the mold 1 for performing a solidifying step B. The elastic mold 1 is transported to a mold releasing step C where a releasing pressurizing chamber 12 is lowered as shown by an arrow by the vertical movement device, not shown, for embracing the elastic mold 1 from above. In this state, a negative pressure is set in the inside of the releasing pressurizing chamber 12 by the pressure controller 13 for introducing air via the opening 9 of the elastic mold 1 for dilating the mold 1. In this manner, a panda-shaped decorative chocolate product 14 is caused to descend onto the conveyor belt 15 so as to be recovered by a product recovery vessel 16. After mold releasing, any chocolate remaining in the mold 1 is blown off by air. The mold 1 is then transported to a preheater 17 for performing a pre-hating step D and the temperature in the elastic mold is set so as to be approximately equal to the discharge temperature during the charging step A for maintaining the quality of the decorative product to have polished surface. In Fig.1, 18 denotes seals mounted at the upper or lower end of the charging pressurizing chamber and the releasing pressurizing chamber for sealing the chambers with respect to the conveyor belt 3.

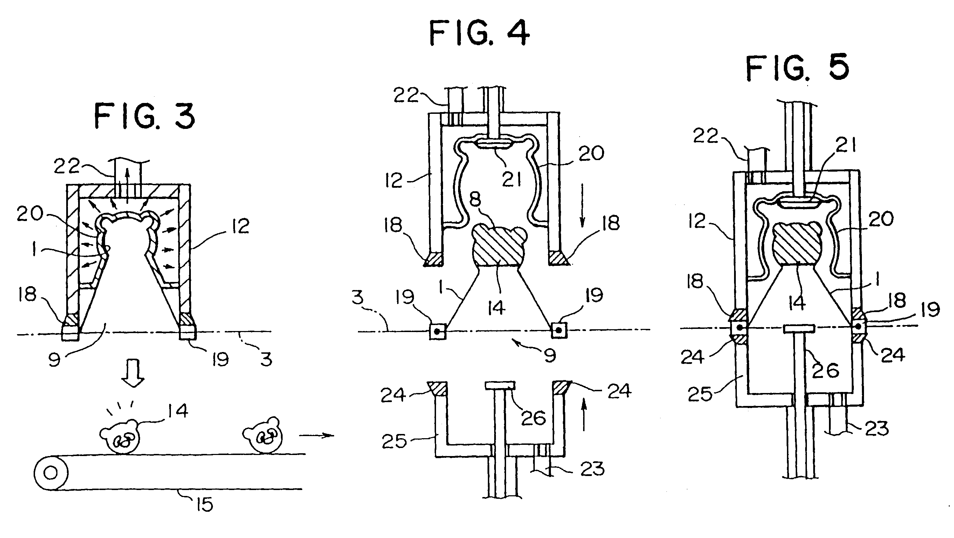

Referring to Figs. 2 and 3, the method and the apparatus of the mold releasing step C improved over the above-mentioned conventional apparatus is explained.

Referring to Figs.2 and 3, the panda-shaped elastic mold 1 is fitted into one of plural through-holes formed at a preset interval in the endless belt conveyor 3 adapted to perform intermittent movement, and is fixed thereto by a fixed frame 19. The elastic mold 1, which is inverted from the position at the charging step A and transported with the opening end 9 directed downwards, has the cooled and solidified panda-shaped decorative product 14 housed within its charging section 8. The mold releasing pressurizing chamber 12, which may be raised and lowered by the vertical movement device, not shown, is provided above the side of the elastic mold 1 opposite to the opening end 9. A porous core 20 having the shape which is substantially the same as the shape assumed by the elastic mold 1 when in the dilated state is provided within the mold releasing pressurizing chamber 12. The inside of the pressurizing chamber 12 is connected via a pressure tube 22 to a pressure controller 13 so as to be evacuated until negative pressure is established in the chamber 12.

Although there are provided only one elastic mold 1 and a pressurizing chamber 12 above the elastic mold 1 as a pair on the conveyor belt 3 in the illustrated embodiment, it is more preferred to provide a plurality of, for example, six or eight, pairs of elastic molds and the associated pressurizing chamber, for improving the operating efficiency.

The decorative chocolate products which are solidified are taken out, using the above-described mold releasing device, by the following steps.

First, the elastic mold 1 is moved on the conveyor belt 3 and brought to standstill at a position directly below the mold releasing pressurizing chamber 12. The chamber 12 is lowered by the operation of the vertical movement device, as shown in Fig.2. The elastic mold 1 is fitted within the core 20 by bringing the seal 18 provided on the lower rim of the chamber 12 into intimate contact with the fixed frame 19 of the belt conveyor 3.

The inside of the mold releasing pressurizing chamber 12 is evacuated by the pressure control device 13. At this time, air flows in a direction from the opening end 9 towards the pressure tube 22. Since the porous core 20 is present in-between the opening end 9 and the pressure tube 22, pressure difference is established when air is discharged out of the porous core 20, so that the elastic mold 1 is dilated into contact with the inner surface of the core 20 to permit the decorative product 14 to be detached from of the elastic mold 1, as shown in Fig.3.

Referring to Figs.4 to 8, a modified embodiment of the apparatus and the method for carrying out the mold releasing step C, that is an embodiment in which when the charged and solidified product is released from the elastic mold 1, an extruder is used for extruding the solidified decorative product.

In Figs.4 to 8, parts or components indicated by the same numerals as those used in Figs.2 and 3 are used in the similar manner and hence the corresponding description is not made.

In Figs.4 to 8, the porous core 20 having the shape which is the same as that of the elastic mold 1 when in a dilated state is mounted within the mold releasing pressurizing chamber 12. Within this pressurizing chamber 12, there is provided an extruder 21 which is passed air-tightly through the core 20 from above the elastic mold 1 and which may be moved vertically for extrusion and retraction by a lifting device, such as a hydraulic cylinder, not shown, from above the elastic mold 1, within which the charged product 14 is accommodated. The inside of the pressurizing chamber 12 is evacuated to negative pressure via a pressure tube 22 by the operation of the pressure controller 13.

Below the opening end 9 of the elastic mold 1, a fitting chamber 25, which is moved vertically by the vertical movement device, not shown, is provided on the opposite side of the belt conveyor 3 with respect to the mold releasing pressurizing chamber 12. Compressed air is introduced into the fitting chamber 25 via a piping 23 from an air compressor, not shown, for pressurizing the inside of the chamber 25 whilst the inside of the pressurizing chamber 12 is evacuated to the negative pressure. Within the fitting chamber 25, there is provided a reception member 26 which may be moved vertically for extrusion and retraction from outside the chamber 25 in a hermetically sealed state by a lifting device, such as a pneumatic cylinder, not shown, and which is adapted for receiving the panda-shaped decorative chocolate product 14 released from the mold 1 by the extruding operation of the extruder 21.

Although there are provided only one elastic mold 1, one pressurizing chamber 12 and one fitting chamber 25 above and below the elastic mold 1 on the conveyor belt 3 in the illustrated embodiment, it is more preferred to provide a plurality of, for example, six to eight elastic molds and the associated pressurizing chamber, for improving the operating efficiency. The chocolate decorative products 14 may be taken out, using the above-described mold releasing device by the following steps.

The elastic mold 1 is first moved by the conveyor belt 3 until it is halted at a position between the mold releasing pressurizing chamber 12 and the fitting chamber 25. The pressurizing chamber 12 and the fitting chamber 25 are lowered and raised, respectively, by the vertical movement devices, as shown in Fig.4, until the seals 18, 24 provided on the upper and lower rims of the chambers 12, 25 are intimately contacted with the fixed frame 19 of the conveyor belt 3 for fitting the elastic mold 1 within the core 20, as shown in Fig.5.

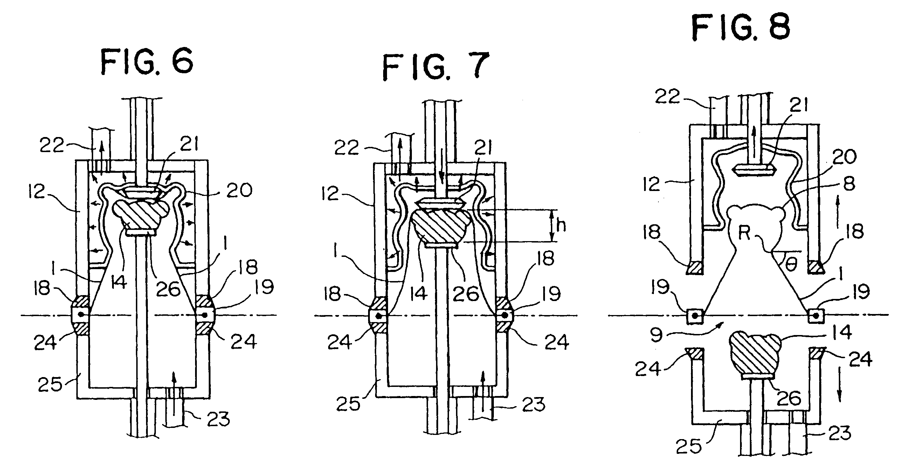

The inside of the mold releasing pressurizing chamber 12 is evacuated by the pressure controller 13, whilst air is drawn into the fitting chamber 25 by, e.g. an air compressor. The flow of air within the chambers 12, 25 occurs in a direction from the piping 23 into the pressure tube 22. Since the porous core 20 is present between the piping 23 and the pressure tube 22, pressure difference is established in the chambers 12, 25, so that the elastic mold 1 is dilated into contact with the inner peripheral surface of the core 20. The molded chocolate product 14, is released to some extent from the elastic mold 1. However, if the chocolate product 14 has micro-sized irregularities on its upper surface, it may not be released completely. Above all, if the micro-sized irregularities are present on the side of the product 14 directed towards the pressurizing chamber 12, it may occur that the elastic mold 1 cannot be peeled off from the chocolate product 14 at these micro-sized irregularities. Thus, the reception member 26 is lifted by the pneumatic cylinder until its upper receiving saucer is caused to bear against the bottom of the decorative chocolate product 14, as shown in Fig.6. The rising stoke of the reception member 26 is previously set to a distance as far as the lower end of the elastic mold 1.

When extended to its upper stroke end, the reception member 26 starts to be lowered at the same rate of descent as that of the extruding member 21, whilst the distance h between the upper end of the reception member 26 and the lower end of the extruding member 21 is maintained, as shown in Fig.7. Since the extruding member 21 is passed through the core 20 and is positioned between the core 20 and the elastic mold 1, the micro-sized irregularities of the elastic mold 1 are separated from the core 20 under the effect of the flow of compressed air for completely separating the mold 1 from the core 20, as shown in Fig.7.

The reception member 26 is returned to its original position within the fitting chamber 25 with the decorative chocolate product 14 resting on its receiving saucer. The fitting chamber 25 is lowered by the vertical movement device so as to be detached from the conveyor belt 3. The extruding member 21 is raised to an upper position within the core 20, while the mold releasing pressurizing chamber 12 is detached upwards from the belt conveyor 3 so as to be reset to its original position (Fig.8).

In the embodiment illustrated, evacuation via the pressure tube 22 and supply of compressed air via the piping 23 are carried out simultaneously. As an alternative, one of these operations via the pressure tube 22 or via the piping 23 suffices to dilate the elastic mold 1. In such case, the piping 23 or the pressure tube 22 is connected to atmospheric pressure.

The panda-shaped chocolate decorative product 14 released from the elastic mold 1 is transported on the conveyor belt 15 and recovered. The elastic mold 1 after the releasing operation is heated by being passed through a heating tunnel, by way of a pre-heating step D before being supplied to the next charging step A.

Although the decorative product is chocolate in the above-described embodiment, the present invention may also be applied to fish cake, ice, plaster, soap or a variety of plastic molded products. The solidifying step may be carried out not only by cooling, as in the above-described embodiment, but also by solidification by heating.

As the porous core 20, a sintered product of synthetic resin having open cells, foamed styrene or urethane, or a reticulated or cloth-like air-transmitting screen, may be employed. For dilating the elastic mold, evacuation from the side opposite to the opening end of the mold and/or supply of compressed air from the opening end into the charging section of the mold, may be employed.

In the embodiment illustrated, an angle at which a conical section between the charging section 8 of the elastic mold 1 and the stationary section secured to the fixed frame 19 makes with the horizontal, that is an angle Θ in Fig.8, is selected to be in a range of from 5° to 35°. Besides, a bend at an R between the conical section and the charging section 8 of the elastic mold 1, as shown in Fig.8, is preferably a round bend having a radius of curvature larger than the right angle. If the angle Θ is less than 5°, the bend is thickened when the elastic mold is immersed in a latex solution to form a thick-walled ring in the elastic mold to render the releasing of the decorative product difficult. On the other hand, if the angle Θ exceeds 35°, it becomes undesirably difficult to take out the molded product during releasing as it is difficult to extend that portion of the elastic mold 1 in a transverse direction.

Besides, after releasing the decorative product from the elastic mold and before supplying the elastic mold again to the charging step, the elastic mold may be heated by the pre-heating step for heating the mold to a temperature approximately equal to that of the as-charged product for reducing the rate of rejects and preventing pinholes from being produced on the product surface.

On the other hand, since the elastic mold is dilated into contact with the inner surface of the porous core having substantially the same shape as the outer shape of the decorative product, in order for the decorative product to be taken out of the mold, the elastic mold can be expanded without becoming deformed irrespective of variable wall thicknesses of the mold. In addition, the elastic mold is deteriorated to the least extent as a result of expansion and contraction of the mold during releasing of the decorative product.

## Claims

1. A method for molding a decorative product comprising a charging step (A) of charging a fluidized charging material (6) from a reservoir (7) into an elastic mold (1) having a charging section for molding a variety of products, a solidifying step (B) for solidifying the fluidized charging material (6) charged into said elastic mold (1), and a releasing step (C) for taking out the solidified decorative product (14), said releasing step (C) comprising dilating the elastic mold (1) into contact with an inner surface of a porous core (20) having substantially the same shape as a shape of the elastic mold (1) when in a dilated state, and releasing the decorative product (14) out of an opening (9) of the elastic mold (1) in the dilated state.

2. The method according to claim 1 wherein for releasing the decorative product (14) via the opening end (9) of the elastic mold (1) in the dilated state, an extruding member (21) is used for extruding and releasing the decorative product (14).

3. The method according to claim 1 wherein for releasing the decorative product (14) via the opening end (9) of the elastic mold (1) in the dilated state, an extruding member (21) is used for extruding and releasing the decorative product (14) while at the same time the decorative product (14) is received at the opening end (9).

4. A molding apparatus for molding a decorative product comprising charging means (7) for charging a fluidized charging material (6) into an elastic mold (1) mounted on production line (3) for producing the decorative product (14), solidification means (11) for solidifying the fluidized charging material (6), and releasing means (12, 13, 20) for taking out the solidified decorative product (14), said releasing means (12, 13, 20) comprising a releasing pressurizing chamber (12) provided with means (12) for enclosing the elastic mold (1) in a gastight manner and releasing the elastic mold (1) in a non-gastight manner and a porous core (20) in said chamber (12) for substantially embracing said elastic mold (1) in a dilated state when the elastic mold (1) is being enclosed in the gastight manner to thereby take out the decorative product (14), and pressure controlling means (13) for dilating said elastic mold (1) onto said core (20) so as to be embraced by said core (20).

5. The molding apparatus according to claim 4 comprising an extruding member (21) for extruding and releasing the decorative product (14) within said releasing pressurizing chamber (12).

6. The molding apparatus according to claim 4 comprising a reception member (26) for receiving the decorative product (14) extruded by said extruding member (21).
